# EUROPEAN PATENT APPLICATION

(11) **EP 2 112 013 A1**
(43) Date of publication of application: **28.10.2009**
(21) Application number: 09004405.8
(22) Date of filing: 26.03.2009
(51) Int. Cl.: B60K 37/02, B60K 35/00

(54) **Instrument Panel Structure and configuration method therefor**

(30) Priority: 22.04.2008 JP 2008111675; 22.04.2008 JP 2008111676; 22.04.2008 JP 2008111677; 22.04.2008 JP 2008111678; 22.04.2008 JP 2008111679; 12.12.2008 JP 2008332403
(71) Applicant: Mazda Motor Corporation, Fuchu-cho Aki-gun Hiroshima 730-8670 (JP)
(72) Inventor: Takayama, Masatoshi, Hiroshima 730-8670 (JP); Toyohara, Toshinori, Hiroshima 730-8670 (JP); Tanaka, Kazuhiro, Hiroshima 730-8670 (JP); Ikura, Kazunori, Hiroshima 730-8670 (JP); Okazaki, Yasuaki, Hiroshima 730-8670 (JP); Ochimizu, Hitoshi, Hiroshima 730-8670 (JP)
(74) Representative: Müller-Boré & Partner Patentanwälte

(57) **Abstract**

An instrument panel device comprises an instrument panel body **1,** a meter cluster portion **4,** a display indication portion **5,** an instrument-panel recess portion **25** comprising a bottom face portion **24** extending from a central portion of the recess portion to a driver's-seat-side end portion of the recess portion and a portion of difference in level **23** which rises upward from a front end portion of the bottom face portion, a projection portion **22** provided in front of the steering wheel, the projection portion being formed in such a manner that a specified portion of the bottom face portion of the recess portion which is located in front of the steering wheel projects upward. A meter-panel face portion of the meter cluster portion is provided at the projection portion. The display indication portion is provided at a central portion of the portion of difference in level.

## Description

The present invention relates to an instrument panel device which is provided at a front portion of a vehicle compartment so as to project rearward and extend in a vehicle width direction and to a configuration or mounting or assembling method therefor.

Conventionally, as disclosed in Japanese Patent Laid-Open Publication No. 2005-297657, an instrument panel structure of an automotive vehicle which comprises an upper meter and a lower meter which are supported at a front upper portion and a rear lower portion of an instrument panel body respectively, and an upper panel and a lower panel which are detachably attached to the instrument panel body so as to enclose the upper meter and the lower meter respectively is known. Herein, the upper meter and the lower meter are disposed in front of a steering wheel at respective positions which correspond to an upper part and a lower part of an upper half portion of the steering wheel. Further, the upper panel is disposed in such a manner that an upper edge of the upper panel is located along the upper half portion of the steering wheel.

The instrument panel structure of an automotive vehicle disclosed in the above-described publication has an advantage that a driver can properly see the upper and lower meters without interruption by the steering wheel. On the other hand, in case the size of these meter portions is made larger in order to further improve the visibility of the meters, it may not be avoided that the upper end of the meter portion becomes higher, so that the front view of the driver would be improperly limited or the driver would feel a sense of oppression.

Further, in case the driver tries to see both the upper meter and the lower meter, seeing the front through a windshield, there may be another problem in that it would be difficult for the driver to recognize displays indicated by the meters promptly and properly because the upper and lower meters are seen vertically continuously.

The present invention has been devised in view of the above-described problems, and an object of the present invention is to provide an instrument panel device which can provide a proper visibility of the meters provided at the instrument panel, without improperly limiting the front view of the driver or making the driver feel the sense of oppression.

The object is solved according to the present invention by the features of the independent claims. Preferred embodiments of the present invention are subject of the dependent claims.

According to the present invention, there is provided an instrument panel device, comprising an instrument panel body provided or to be provided at a front portion of a vehicle compartment so as to project rearward and extend in a vehicle width direction, a meter cluster portion provided or to be provided substantially in front of a steering wheel, a display indication portion to indicate information relating to at least one onboard device, an instrument-panel recess portion provided at an upper face portion of the instrument panel body, the instrument-panel recess portion comprising a bottom face portion which substantially extends from a central portion of the instrument-panel recess portion to a driver's-seat-side end portion of the recess portion and a portion of difference in level which rises upward from a front end portion of the bottom face portion, a projection portion provided or to be provided in front of the steering wheel, the projection portion being formed in such a manner that a specified portion of the bottom face portion of the instrument-panel recess portion which is located in front of the steering wheel projects substantially upward, wherein a meter-panel face portion of the meter cluster portion is provided at the projection portion, and the display indication portion is provided at a central portion of the portion of difference in level in the vehicle width direction.

According to the present invention, it can be prevented that the position of the upper ends of the meter cluster portion and the display indication portion become improperly high, ensuring the properly large sizes of the meter cluster portion and the display indication portion. Thus, the meter panel of the cluster meter portion and the information indicated at the display indication portion can be seen properly by the driver, without improperly limiting the front view of the driver or making the driver feel the sense of oppression.

According to another embodiment of the present invention, the instrument panel device further comprises an instrument-panel protrusion portion provided or to be provided at or near the upper face portion of the instrument panel body, the instrument-panel protrusion portion forming an upper face of the instrument-panel recess portion. Thus, the meter panel of the cluster meter portion and the information indicated at the display indication portion can be seen properly by the driver, without improperly limiting the front view of the driver or making the driver feel the sense of oppression.

According to another embodiment of the present invention, the instrument-panel protrusion portion has a peak point which is the highest of the upper face portion of the instrument panel body, and the display indication portion is located substantially on a center side of the vehicle compartment from the peak point of the instrument-panel protrusion portion. Thereby, the meter cluster portion and the information displayed at the display indication portion can be seen more properly by the driver, without improperly limiting the front view of the driver or making the driver feel the sense of oppression.

According to another embodiment of the present invention, the instrument panel device further comprises an instrument-panel rearward-slant-face portion provided at the upper face portion of the instrument panel body, the instrument-panel rearward-slant-face portion being formed so as to gently slant rearward over a substantially whole area of the upper face portion of the instrument panel body in the vehicle width direction in such a manner a central portion thereof extends rearward the most, wherein the central portion of the instrument-panel rearward-slant-face portion is connected to a center console portion which comprises at least one operational portion of an onboard device, and the display indication portion is provided at a specified portion of the portion of difference in level which is located substantially in front of the center console portion, the display indication portion pointing to a driver's seat side in a plan view. Thereby, an inner space and an upper space of the instrument panel, particularly, the central portion of the instrument panel can be ensured properly, without improperly limiting spaces for the driver's seat and the passenger's seat. Thus, various onboard devices can be disposed by effectively using the inner space of the instrument panel, and the display indication portion and the like can be disposed at a proper position by effectively using the upper space of the instrument panel. Further, since the display indication portion is provided at the specified portion of the portion of difference in level which is located substantially in front of the center console portion in such a manner that the display indication portion points to the driver's seat side in the plan view, the proper visibility of the display indication portion can be ensured, without improperly limiting the front view of the driver and any other problems.

According to another embodiment of the present invention, the portion of difference in level of the instrument-panel recess portion and the center console portion form a designed face, which is of a substantially reverse-J shape, which extends continuously from a driver's-seat-side portion to the center console portion beyond the central portion of the instrument-panel recess portion in such a manner that the portion of difference in level of the instrument-panel recess portion projects substantially forward in a plan view. Thereby, the driver who drives the vehicle looking at the front can see the information indicated at the display indication portion and the information of the operational portion of the onboard device at the center console portion continuously and properly by moving the driver's eyes from the side portion to the lower portion, so that the driver can properly operate the operational portion of the onboard device.

According to another embodiment of the present invention, the center console portion is provided so as to project upward in a mountain shape in a side view in such a manner that a front-upper end portion thereof connects to a rear end of the instrument-panel recess portion and an onboard device is stored therein. Thereby, since an inner space with a large volume can be formed at a lower portion, various onboard devices may be disposed properly by using the inner space of this mountain-shaped portion.

According to another embodiment of the present invention, the center console portion has a rear wall face which extends obliquely rearward and downward, an onboard device which is of a substantially rectangular parallelepiped shape is disposed in the central console portion along the rear wall face, and another onboard device is disposed in the central console portion before the onboard device which is of the substantially rectangular parallelepiped shape. Thereby, a navigation device or the like, as the onboard device which is of the substantially rectangular parallelepiped shape, can be disposed easily in such a manner that its display is inclined so as to be seen properly, preventing a gap from existing between the navigation device or the like and the center console portion. Further, by disposing another onboard device in the central console portion before the above-described navigation device or the like, various onboard devices may be disposed effectively by using the inner space of the mountain-shaped portion.

According to another embodiment of the present invention, a speaker of an audio device is disposed at a front portion in the center console portion, a ventilation duct of an air-conditioning unit is disposed in the center console portion behind the speaker, and the onboard device which is of the substantially rectangular parallelepiped shape is disposed below the ventilation duct. Thereby, a common layout of the air-conditioning unit can be provided regardless of the kind of vehicles with a left-side-disposition steering wheel for Europe markets or the like, or vehicles with a right-side-disposition steering wheel for Japanese markets or the like. Thus, various onboard devices may be disposed properly at the inner space of the mountain-shaped portion, improving commonality of the instrument panel device effectively.

According to another embodiment of the present invention, an onboard functional portion is provided at a specified portion of the portion of difference in level of the instrument-panel recess portion which is located at a position which overlaps with the meter cluster portion in an elevation view. Thereby, the specified portion of the portion of difference in level of the instrument-panel recess portion which is located at the position which overlaps with the meter cluster portion in the elevation view can be used effectively, so that the use efficiency of the instrument panel space can be improved.

According to another embodiment of the present invention, the portion of difference in level of the instrument-panel recess portion has a different design from a surrounding part of the upper face portion of the instrument panel body. Thereby, the sporty feeling can be provided to the driver more effectively, for example, by improving the design effect of the vehicle compartment.

According to another embodiment of the present invention, an air-conditioning unit is stored right below the display indication portion, and an onboard device is disposed right behind the air-conditioning unit at a position which overlaps with the air-conditioning unit in an elevation view. Thereby, the air-conditioning unit and another onboard device such as the navigation device can be disposed efficiently, by using the relatively large volume of the inner space formed below the instrument panel.

According to another embodiment of the present invention, at least one vent for defroster is provided at a front portion of the upper face portion of the instrument panel body, an air-conditioning unit is stored right below the display indication portion, and a defroster opening for supplying conditioning air from the air-conditioning unit to the vent for defroster is formed at the instrument panel body in such a manner that at least a part of the defroster opening does not overlap with the display indication portion in a plan view. Thereby, the flowing of conditioning air can be made smooth, preventing the conditioning air passing through the vent for defroster from interfering with the display indication portion.

According to another embodiment of the present invention, a part of the defroster opening vent for defroster which is located further from a driver's seat in the vehicle width direction does not overlap with the display indication portion in the plan view. Thereby, even in case a device with a large volume is stored at the display indication portion, the flowing of the conditioning air can be made smooth, disposing the device in the display indication portion. For example, in case the navigation device with the relatively large volume is stored, the navigation device may be properly disposed on the side of the driver's seat.

According to another embodiment of the present invention, a navigation device is provided at a part of the display indication portion which is located closer to the driver's seat. Thus, for example, in case the navigation device with the relatively large volume is stored, the navigation device may be properly disposed on the side of the driver's seat.

According to another embodiment of the present invention, a vent to supply conditioning air to a side portion of the vehicle compartment is formed at a side portion of the instrument panel body, and a ventilation duct to supply the conditioning air from an air-conditioning unit, which is stored right below the display indication portion, to the vent is provided so as to extend in the vehicle width direction in front of the meter cluster portion and below the portion of difference in level. Thereby, the volume of the ventilation duct can be ensured properly, avoiding the interference of the ventilation duct and meter cluster portion and the like.

According to the invention, there is further provided a method of configuring, assembling, designing and/or mounting a instrument panel device, in particular according to the invention or a preferred embodiment thereof, comprising the following steps:
providing an instrument panel body at a front portion of a vehicle compartment so as to project rearward and extend in a vehicle width direction;
providing a meter cluster portion substantially in front of a steering wheel;
providing an instrument-panel recess portion at an upper face portion of the instrument panel body, the instrument-panel recess portion comprising a bottom face portion which substantially extends from a central portion of the instrument-panel recess portion to a driver's-seat-side end portion of the instrument-panel recess portion and a portion of difference in level which rises upward from a front end portion of the bottom face portion; and
providing a projection portion in front of the steering wheel, the projection portion being formed in such a manner that a specified portion of the bottom face portion of the instrument-panel recess portion which is located in front of the steering wheel projects substantially upward,
wherein a meter-panel face portion of said meter cluster portion is provided at said projection portion, and a display indication portion a display to indicate information relating to at least one onboard device is provided at a central portion of said portion of difference in level in the vehicle width direction.

Other features, aspects, and advantages of the present invention will become apparent from the following description which refers to the accompanying drawings. It should be understood that even though embodiments are separately described, single features thereof may be combined to additional embodiments.
FIG. **1** is a perspective view showing an instrument panel device according to a first embodiment of the present invention.
FIG. **2** is a view of the instrument panel device according to the first embodiment, when viewed from a driver's seat.
FIG. **3** is a plan view showing a specific structure of the instrument panel device according to the first embodiment.
FIG. **4** is a sectional view taken along line IV-IV of FIG. **3**.
FIG. **5** is a plan sectional view showing specific structures of a meter cluster portion and a display indication portion according to the first embodiment.
FIG. **6** is an explanatory diagram showing a specific structure of the display indication portion according to the first embodiment.
FIG. **7** is a sectional view taken along line VII-VII of FIG. **3**.
FIG. **8** is a perspective view showing an inner structure of an instrument panel according to the first embodiment.
FIG. **9** is a plan sectional view showing a disposition state of an onboard device according to the first embodiment.
FIG. **10** is an explanatory diagram showing an information perception characteristic based on a position of retinas of a person.
FIG. **11** is a view of the instrument panel device, which corresponds to FIG. **2****,** with a mark of a move of driver's eyes.
FIG. **12** is a view of an instrument panel device according to a second embodiment, when viewed from the driver's seat.
FIG. **13** is a plan view showing a specific structure of the instrument panel device according to the second embodiment.
FIG. **14** is a sectional view taken along line XIV-XIV of FIG. **13**.
FIG. **15** is a sectional view taken along line XV-XV of FIG. **13**.
FIG. **16** is a plan sectional view showing specific structures of a meter cluster portion and a display indication portion according to the second embodiment.
FIG. **17** is an explanatory diagram showing a specific structure of the display indication portion according to the second embodiment.
FIG. **18** is a sectional view taken along line XVII-XVII of FIG. **13**.
FIG. **19** is a perspective view showing an inner structure of an instrument panel according to the second embodiment.

Hereinafter, preferred embodiments of the present invention will be described referring to the accompanying drawings.

### EMBODIMENT 1

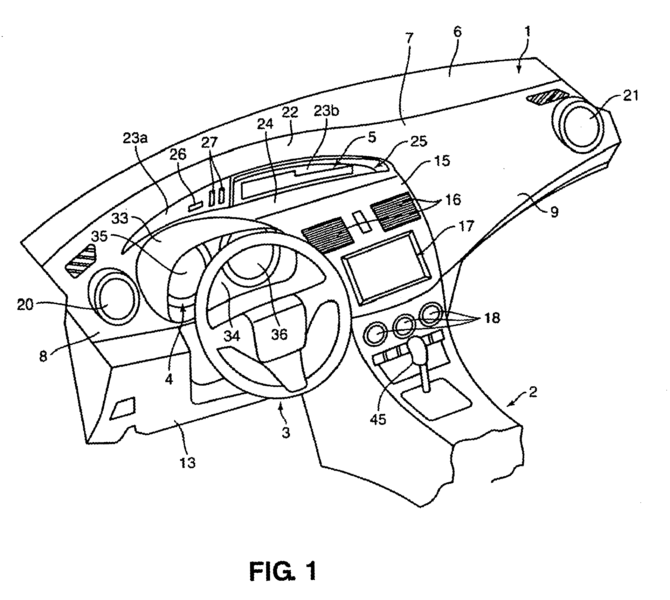

FIGS. **1** through **4** show an instrument panel device according to a first embodiment of the present invention. This instrument panel device comprises an instrument panel body **1** which is to be provided at a front portion of a vehicle compartment so as to substantially project rearward and extend in a vehicle width direction, a center console portion **2** which is to be provided so as to substantially extend downward from a central portion of the instrument panel body **1** toward a bottom portion of the vehicle compartment, a meter cluster portion **4** which is to be substantially provided in front of a steering wheel **3** to be operated by a driver, and a display indication portion 5 which indicates information relating to onboard devices which will be described later. Herein, a driver's seat is located on the left in the vehicle compartment, and the steering wheel **3** is disposed on the left accordingly. However, the invention my be equally applied to a vehicle having a driver's seat is located on the right in the vehicle compartment.

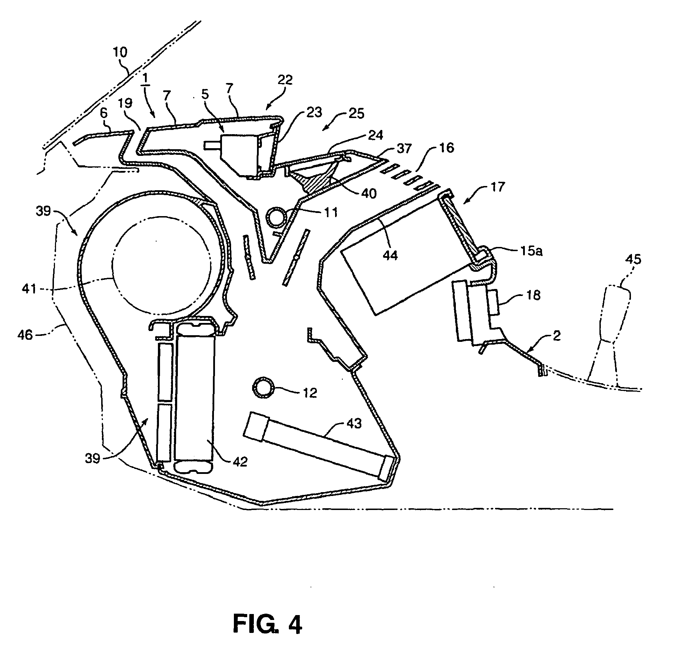

The instrument panel body **1** comprises a front portion **6** which extends substantially horizontally in the vehicle width direction along a lower end portion of a windshield **10,** an upper face portion **7** which connects to a rear end portion of the front portion **6,** and a pair of right and left substantially rearward-slant-face portions **8, 9** which is provided in back of the upper face portion **7** so as to gently slant rearward over a substantially whole width. The instrument panel body **1,** which is made e.g. of synthetic resin material or the like, is to be supported at upper and lower cross beams **11, 12** which are provided so as to substantially extend in the vehicle width direction via brackets (not illustrated) or the like. Reference numeral **46** denotes a dash panel in FIG. **4****.**

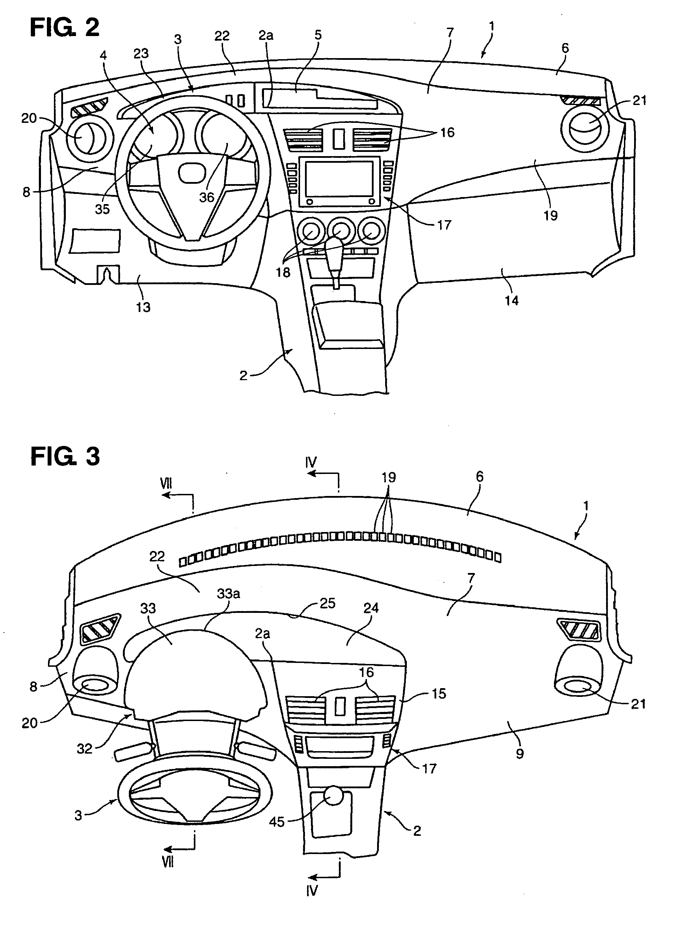

A lower plate **13** which at least partly hides base portions of a steering shaft and various pedals and/or protects knees and the like of the driver at a vehicle frontal collision is attached on the left side (driver's seat side) of the center console portion **2.** A lower plate **14** which includes a lid of a glove box and the like is attached on the right side (passenger's seat side) of the center console portion **2.** Thus, the instrument panel is formed. The rearward-slant-face portions **8, 9** and an upper portion **15** of the center console portion **2** form an instrument-panel rearward-slant-face portion which is to be provided so as to gently slant rearward over the substantially whole width and preferably has a ridgeline in such a manner a central or intermediate portion thereof in the plan view extends rearward the most (see FIG. **3****).**

A vent grill **16** which supplies air or conditioning air and the like towards or to a central portion in the vehicle compartment is provided at the upper portion **15** of the center console portion **2** which forms a central or intermediate portion of the above-described instrument-panel rearward-slant-face portion. Below or adjacent to the vent grill **16** are provided a navigation device **17** as an onboard device and/or an operational portion **18** which comprises at least one operational switch of an air-conditioning unit **39** which will be described later. A vent for defroster **19** is provided at or near the front portion **6** of the instrument panel body **1.** One or more side vents **20, 21** which supply the air or conditioning air and the like to the side portion(s) in the vehicle compartment are provided at one or both sides of the rearward-slant-face portions **8, 9.**

Further, an instrument-panel protrusion portion **22** is provided at a specified (predetermined or predeterminable) area of the upper face portion **7** of the instrument panel body **1** which extends from the center (or a widthwise intermediate position) to a driver's-seat-side end portion thereof (or a position adjacent to the position of a driver or driver's seat). The instrument-panel protrusion portion is formed in a mountain or rounded shape in such a manner that it has a highest point at a portion thereof which is close to a driver's-seat-side end portion **2a** of the center console portion **2.** At least one instrument-panel recess portion **25** is further provided, which comprises a portion of difference in level or offset portion **23** which goes down from a rear end portion of the instrument-panel protrusion portion **22** and an instrument-panel bottom face portion **24** which substantially extends obliquely upward and rearward from a lower end of the portion of difference in level **23.**

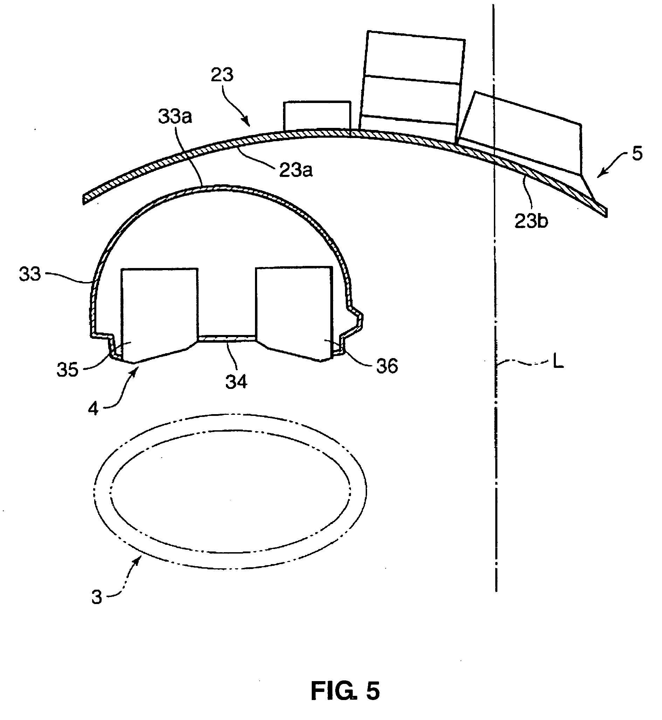

Thus, the instrument-panel recess portion **25** comprises the instrument-panel bottom face portion **24** which substantially extends from the central portion of the instrument-panel recess portion **25** (or a position close thereto) to a driver's-seat-side end portion of the recess portion and/or substantially extends obliquely upward and rearward and the portion of difference in level **23** which rises upward from a front end portion of the instrument-panel bottom face portion **24.** Further, as shown in FIG. **3****,** a front side portion of the instrument-panel recess portion **25** is formed in a curve shape so as to substantially project forward (or away from the driver's position) at its center or widthwise intermediate position in a plan view. According to this, as shown in FIG. **5****,** the portion of difference in level **23** is formed in a curve shape so as to have its side portions which are located rearward (with respect to a center or intermediate portion thereof). Reference character **L** denotes a center line in the vehicle width direction in FIG. **5****.**

The rearward-slant-face portion **8** is or is to be connected to a left-side portion of the rear end portion of the instrument-panel recess portion **25** so as to gently slant rearward. The upper portion **15** of the center console portion **2** is or is to be connected to a right-side portion of the rear end portion of the instrument-panel recess portion **25.** Thus, the portion of difference in level **23** of the instrument-panel recess portion **25** and the center console portion **2** form a designed face, which is of a substantially reverse-J shape, which extends continuously from a driver's-seat-side portion to the center console portion **2** beyond the central portion of the instrument-panel recess portion **25** in such a manner that the portion of difference in level **23** of the instrument-panel recess portion **25** projects forward in the plan view.

The portion of difference in level **23** of the instrument-panel recess portion **25** has or may have a different design from a surrounding part of the upper face portion of the instrument panel body **1** so as to provide a different impression, for example, by applying a different color. Such design may increase the recognizability for a driver of the portion of difference in level **23** with respect to the other part of the instrument panel body **1.** In case, for example, the surface of the instrument panel body **1** is formed in a grain shape with a color of dark gray, the portion of difference in level **23** may be formed with a shiny surface as if it looks like an indication display which is switched off. Specifically, a left-side portion (preferably half portion) **23a** of the portion of difference in level **23** which is located behind an onboard functional portion, which will be described below, has a black or dark panel added, while a right-side portion (preferably half portion) **23b** of the portion of difference in level **23** which is located behind an illuminator of the display indication portion **5** has a dark glass with a limited transparency. The above-described black panel and dark glass preferably are provided continuously in the vehicle width direction so that the portion of difference in level **23** looks like a display indication portion as a whole.

Further, an onboard functional portion, such as a slot portion **26** for a SD card, a connector **27** of an portable audio device, or a store portion (not illustrated), is or may be provided at the left-side (half) portion **23a** of the portion of difference in level **23** which is located in front of the meter cluster portion **4** as shown in FIG. **1****.**

The display indication potion **5,** which comprises a liquid crystal display (OLED or the like display) to indicate information relating to the onboard devices comprising an air-conditioning unit and/or an audio unit, is provided at an offset portion of the portion of difference in level **23** from a disposition portion of the onboard functional portion, that is, at the above-described right-side (half) portion **23b** which is formed in a curved shape and inclined so as to point to the driver's seat (left side) in the plan view, which is located on the intermediate or substantially center side of the highest point of the instrument-panel protrusion portion **22** and/or in front of the center console portion **2** as shown in FIG. **5****.**

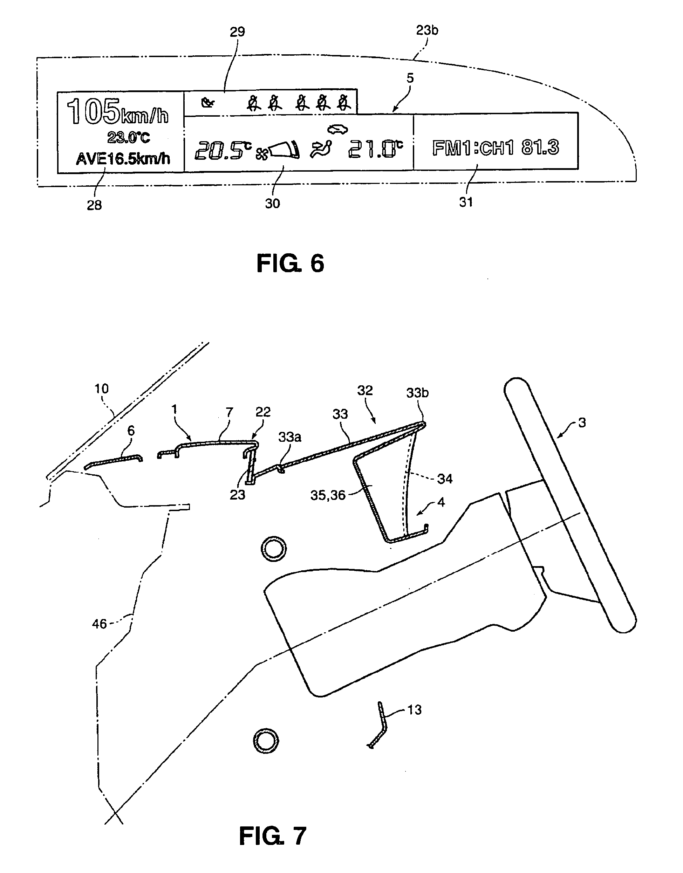

The display indication portion **5** comprises, as shown in FIG. **6****,** a first indication portion **28** which selectively indicates traveling information, such as an average speed and/or fuel consumption from DIS (Driver Information System) and/or the outside temperature, and/or simplified navigation information (particularly without illustration or map information), a second indication portion **29** which indicates warning information particularly relating to a seatbelt and/or a child seat, a third indication portion **30** which indicates information relating to the air-conditioning unit which particularly comprises an air-conditioning temperature, volume, conditioning-air supply pattern and/or the like, and a fourth indication portion **31** which indicates information relating to the audio device which particularly comprises an audio source, channel, frequency, track, title, program information and/or the like.

As shown in FIG. **7****,** a protrusion portion **32** is provided at the bottom face portion **24** of the instrument-panel recess portion **25** which is located on the driver's-seat side of the highest point of the instrument-panel protrusion portion **22** at or near the upper face portion **7** of the instrument panel body **1.** The meter cluster portion **4** is provided at the above-described protrusion portion **32.** The meter cluster portion **4** preferably has a meter hood portion **33** which forms at least part of an upper wall face of the protrusion portion **32** and/or a meter-panel face portion **34** which is provided at a specified (predetermined or predeterminable) portion in front of the steering wheel **3** so as to at least partly overlap with the steering wheel **3** in an elevation view. A vehicle speed meter **35** and/or an engine speed meter **36** are provided at the meter-panel face portion **34** so that the important information of the vehicle speed and/or the engine speed can be indicated properly compared to other information indicated at the display indication portion **5** so that the driver may read such information easily.

The meter hood portion **33** which forms the upper wall face of the protrusion portion **32** preferably is disposed over an area from the instrument-panel recess portion **25,** and the rearward-slant-face portion **8** and the meter-panel face portion **34** are disposed at a rear portion of the protrusion portion **32.** Thus, the driver seated in the driver's seat can reliably see the vehicle speed meter **35** and/or the engine speed meter **36** at the meter-panel face portion **34** via an opening which is formed at the upper portion (preferably an upper half portion) of the steering wheel **3.**

A curve portion **33a** is provided at a front end portion of the meter hood portion **33** as shown in FIG. **3** so as to connect to the instrument-panel bottom face portion **24** of the instrument-panel recess portion **25.** The instrument-panel bottom face portion **24** is disposed so as to at least partly enclose the meter cluster portion **4,** preferably substantially enclose both-side portions of the meter cluster portion **4.** Further, the highest point of the meter cluster portion **4,** that is, a central or intermediate portion **33b** of the meter hood portion **33** is, as shown in FIG. **7****,** positioned above the instrument-panel protrusion portion **22.**

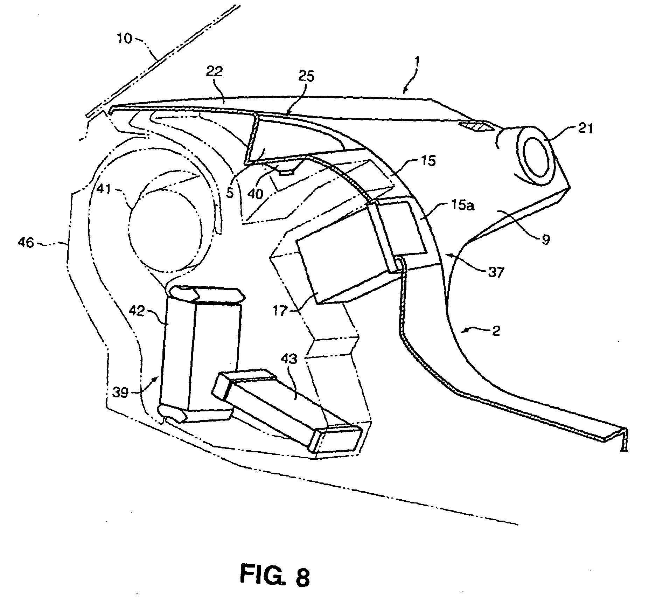

The center console portion **2** which is provided so as to extend downward from the central portion of the instrument panel body **1** is, as shown in FIGS. **4** and **8****,** provided so as to have a mountain-shaped portion **37** which projects upward in a mountain shape in the side view in such a manner that its front-upper end portion connects to a rear end of the instrument-panel recess portion **25** and various onboard devices are at least partly stored in the mountain-shaped portion **37.** That is, the upper portion **15** of the center console portion **2** preferably has a rear wall face **15a** which extends obliquely rearward and downward, and the navigation device **17** as the onboard device (which particularly is of the substantially rectangular parallelepiped shape) is or can be at least partly disposed in the central console portion **2** along the rear wall face **15a**.

Further, other onboard devices which comprise the air-conditioning unit **39** and/or the speaker of the audio device are or can be disposed between the navigation device **17** and the mountain-shaped portion **37** of the center console portion **37.** The air-conditioning unit **39** preferably comprises a blower **41** which is provided at an upper portion thereof, an evaporator **42** and/or a heater **43** which are provided at a lower portion thereof, and a ventilation duct **44** which connects to the vent grill **16,** and it is provided at a central or intermediate portion in the vehicle width direction.

The air-conditioning unit **39** is to be disposed in an inner space of the instrument panel right below the display indication portion **5** which is provided on a passenger's-seat-side (right-side) portion of the instrument-panel recess portion 25, that is, an interconnection portion between the central portion of the instrument panel body **1** and the center console portion **2.** At least one speaker **40** of the audio device is to be disposed at a front portion of the mountain-shaped portion **37,** a ventilation duct **44** of the air-conditioning unit 39 is to be disposed behind the speaker **40,** and/or the navigation device **17** (which is the substantially rectangular parallelepiped shape) is to be disposed below the ventilation duct **44.**

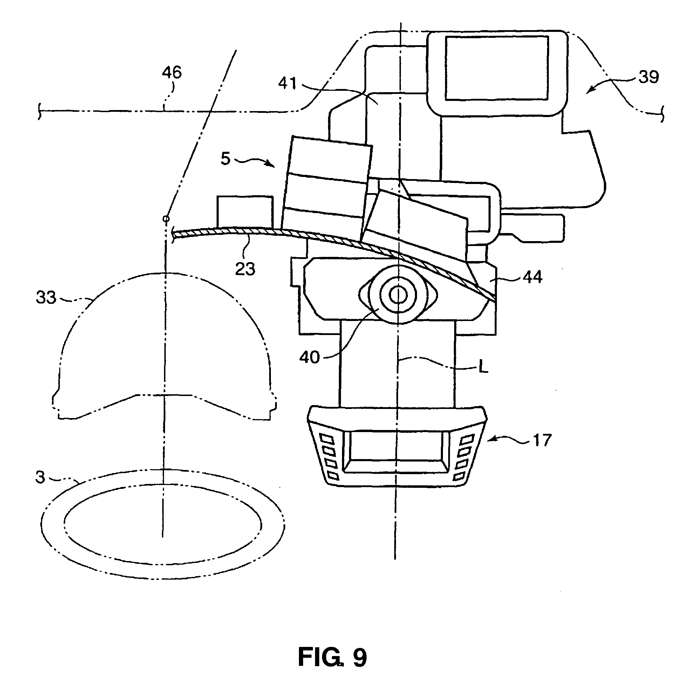

The blower **41** as a major part of the air-conditioning unit **39** and the navigation device **17** are to be disposed so as to be at least partly offset from each other in a vehicle longitudinal direction and/or substantially at the same height position as shown in FIG. **4****.** Further, as shown in FIG. **9****,** the blower **41** and the navigation device **17** are to be disposed respectively at or near the central portion of the instrument panel in the vehicle width direction, and the air-conditioning unit **39** and the navigation device **17** are to be located so as to at least partly overlap with each other in the elevation view.

As described above, the instrument panel device according to the present embodiment comprises the instrument panel body **1** which is to be provided at the front portion of the vehicle compartment so as to substantially project rearward and extend in the vehicle width direction, the meter cluster portion **4** which is provided in front of the steering wheel **3,** the display indication portion **5** which indicates information relating to the onboard device, the instrument-panel recess portion **25** which is provided at or near the upper face portion **7** of the instrument panel body **1,** the instrument-panel recess portion **25** comprising the bottom face portion **24** which substantially extends from the central portion of the instrument-panel recess portion **25** to the driver's-seat-side end portion of the instrument-panel recess portion **25** and the portion of difference in level **23** which rises upward from or near the front end portion of the bottom face portion **24,** the projection portion **32** which is provided in front of the steering wheel **3,** the projection portion **32** being formed in such a manner that the specified (predetermined or predeterminable) portion of the bottom face portion **24** of the instrument-panel recess portion **25** which is located in front of the steering wheel **3** substantially projects upward, wherein the meter-panel face portion **34** of the meter cluster portion **4** is provided at the projection portion **32,** and the display indication portion **5** is provided at or near the central portion of the portion of difference in level **23** in the vehicle width direction. Thus, the meters and the like at the instrument panel can be seen properly by the driver, without improperly limiting the front view of the driver or making the driver feel the sense of oppression. Accordingly, readability of the displays in the instrument panels is particularly improved.

That is, according to the present embodiment, the projection portion **32** which has the meter hood portion **33** is formed above the bottom face portion **24** of the instrument-panel recess portion **25** which is provided at the upper face portion **7** of the instrument panel body **1** substantially in front of the driver's seat, the meter-panel face portion **34** of the meter cluster portion **4** at the projection portion **32** is to be disposed so as to substantially face or correspond to the steering wheel **3,** and the display indication portion **5** is provided at the central or intermediate portion of the portion of difference in level **23** which is located substantially in front of the center console portion **2.** Thereby, the display indication portion **5** and the meter cluster portion **4** can be located so as to be offset from each other laterally.

Accordingly, it would not be necessary to ensure the proper visibility by disposing the meter cluster portion **4** and the display indication portion **5** offset from each other vertically, so that it can be prevented that the position of the upper end of either of these portions **4, 5** becomes improperly high. Thus, even in case the size of these portions **4, 5** is made large to ensure the proper visibility, the vehicle speed meter **35** and/or the engine speed meter **36** which are provided at the meter-panel face portion **34** of the meter cluster portion **4** and the various information of the indication portions **28-31** at the display indication portion **5** can be seen properly by the driver, without improperly limiting the front view of the driver or making the driver feel the sense of oppression.

Particularly, in case the bottom face portion **24** of the instrument-panel recess portion **25** where the display indication portion **5** is provided is provided so as to extend obliquely upward and rearward along the direction of the driver's eyes, the visibility can be ensured effectively by lowering the position of a bottom portion of the display indication portion **5** as much as possible. Accordingly, the information indicated at the display indication portion **5** can be seen properly by the driver, without improperly limiting the front view of the driver or making the driver feel the sense of oppression.

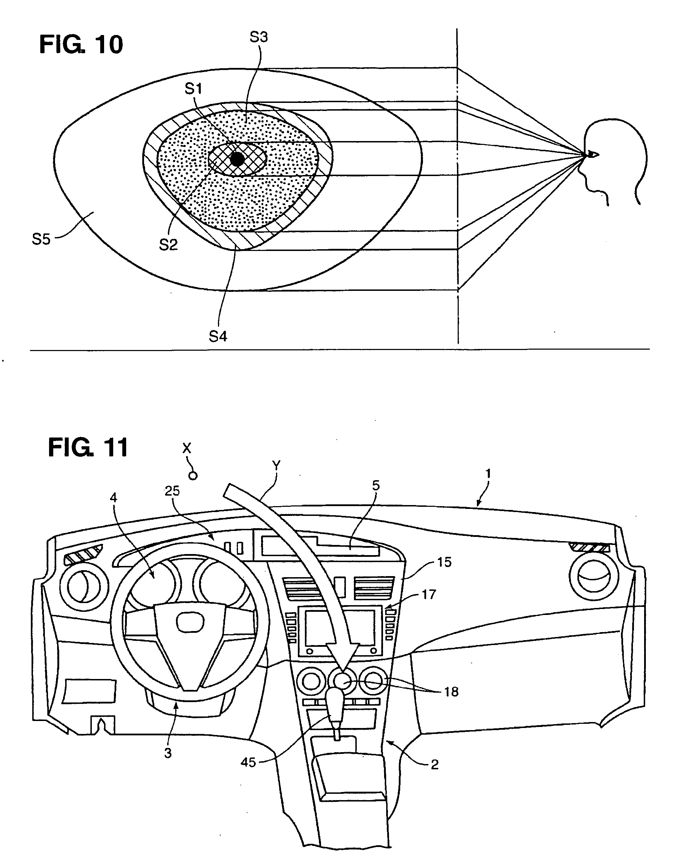

Herein, there is a tendency that the information perception characteristic (field of vision) which is based on the position of retinas of a person deteriorates in accordance with the distance from the center of the retinas. The characteristic comprises, as shown in FIG. **10****,** a perceptive filed **S1** where the visual perception function is superior so as to provide a high information perception, an effective field **S2** where the steady gaze of information is possible only with the move of an eyeball so as to perceive particular information quickly, a steady-gaze stable filed **S3** where the normal steady gaze of information is possible with assistance of the move of a head for the eyeball's move, an induction field **S4** where the existence of information is determinable so as to affect the sense of space perception, and another induction field **S5** where the visual perception function is so inferior that only assistant function to provide induction to other sensitive fields is performed. These fields **S1-S5** are located substantially circularly as shown in the figure. Herein, there is a tendency that the lateral width of this characteristic is greater than the vertical width of that as shown. Accordingly, the lateral offset disposition of the meter cluster portion **4** and the display indication portion **5,** like the present embodiment, can further improve the visibility of the meter cluster portion **4** and the information of the display indication portion **5.**

Further, according to the present embodiment, the vehicle speed meter **35** and/or the engine speed meter **36** are provided at the meter cluster portion **4** located substantially in front of the driver's seat (at least partly behind the steering wheel **3** as seen from the driver's perspective) so that the important information of the vehicle speed and/or the engine speed is indicated in an easily perceptible manner. Meanwhile, the relatively less important information, such as the average vehicle speed and/or fuel consumption form the DIS (Driver Information System), the outside temperature and/or the like, is indicated at the display indication portion **5** which is located offset from the meter cluster portion **4.** In this case, in particular, the driver looking at the front through the windshield can see the important information indicated at the meter cluster portion **4** quickly and easily without moving the driver's eyeball greatly.

According to the present embodiment, the upper portion **15** of the center console portion **2** is or is to be connected to the right-side rear end portion of the instrument-panel recess portion **25** where the display indication portion **5** is provided, and the instrument-panel recess portion **25** and the center console portion **2** form the designed or shaped face, which is of the substantially reverse-J shape. Thereby, as shown in FIG. **11****,** the driver who drives the vehicle looking at the front **X** through the windshield can see the information relating to the onboard devices which are indicated at the display indication portion **5** and the display of the navigation device **17** provided at the upper portion **15** of the center console portion **2** and the like continuously and properly, by moving the driver's eyes from the side portion to the lower portion (see an arrow **Y**).

Further, the navigation device **17** and/or the operational portion **18** of the air-conditioning unit **39** are provided above or near a shift lever **45** which is disposed beside the driver's seat, so that the navigation device **17** and/or the operational portion **18** can be located between the steering wheel **3** which the driver grips while driving and the shift lever **45** which is operated at need. Thus, the operations by the driver can be conducted easily and properly.

Also, the center console portion **2** is provided so as to project substantially upward in the mountain shape or bent or non-linear manner in the side view so as to have the mountain-shaped portion **37** in such a manner that the front-upper end portion connects to the rear end of the instrument-panel recess portion **25.** Thereby, the inner space with the large volume can be formed at the lower portion below the mountain-shaped portion **37,** so that the various onboard devices such as the navigation device **17** may be disposed properly by using the inner space of this mountain-shaped portion **37.**

That is, the center console portion **2** preferably has the rear wall face **15a** which extends obliquely rearward and downward, and the navigation device **17** as the onboard device (which particularly is of the substantially rectangular parallelepiped shape) is or can be disposed in the central console portion **2** along the rear wall face **15a.** Thereby, the navigation device **17** can be disposed easily in such a manner that its display is inclined so as to be seen properly, preventing a gape from existing between the navigation device **17** and the center console portion **2.** Further, by preferably disposing the speaker **40** of the audio device in the central console portion **2** before the navigation device **17** and/or preferably disposing the ventilation duct **44** of the air-conditioning unit **39** in back of the speaker **40,** various onboard devices may be disposed effectively by using the inner space of the mountain-shaped portion **37.**

In particular, in case the air-conditioning unit **39** is to be disposed in the inner space of the instrument panel at the intersection portion of the instrument panel body **1** and the center console portion **2,** that is, at the central portion of the instrument panel in the vehicle width direction like the present embodiment, the common layout of the air-conditioning unit **39** can be provided regardless of the kind of vehicles with the left-side-disposition steering wheel for Europe or US markets or vehicles with the right-side-disposition steering wheel for Japanese markets. Thus, commonality of the instrument panel device can be improved effectively.

Further, the slot portion **26** for the SD card and/or other memory or storage device, the connector **27** of the portable audio device, and/or the store portion as the onboard functional portion are or can be provided at the left-side (driver's side) half portion **23a** of the portion of difference in level **23** which is located in front of the meter cluster portion **4.** Thereby, the specified (predetermined or predeterminable) portion of the portion of difference in level **23** of the instrument-panel recess portion **25** which is to be located at the position which at least partly overlaps with the meter cluster portion **4** in the elevation view can be used effectively, so that the use efficiency of the instrument panel space can be improved.

The portion of difference in level **23** of the instrument-panel recess portion **25** has the different design from the surrounding part of the upper face portion **7** of the instrument panel body **1.** Thereby, the sporty feeling can be provided to the driver more effectively, for example, by improving the design effect of the vehicle compartment, while maintaining proper visibility and/or readability for the driver.

Further, the instrument-panel protrusion portion **22** has the peak point which is the highest of the upper face portion **7** of the instrument panel body **1,** and the display indication portion **5** preferably is located substantially on the center or widthwise intermediate side of the vehicle compartment from the peak point of the instrument-panel protrusion portion **22** as shown in FIG. **2****.** Thereby, the display indication portion **5** can be located on the side of the passenger seat close to the steering wheel **3** so that the driver can see more properly the display indication portion **5.**

Further, the instrument-panel rearward-slant-face portions **8, 9** are provided at or near the upper face portion of the instrument panel body **1** so as to gently slant rearward over the substantially whole area of the upper face portion **7** of the instrument panel body **1** in the vehicle width direction in such a manner the central portion thereof extends rearward the most. Herein, the central portion of the instrument-panel rearward-slant-face portions **8, 9** is connected to the center console portion **2** which comprises the operational portion **18** of the air-conditioning unit **39,** and/or the display indication portion **5** is provided at a specified portion (the right-side half portion **23b)** of the portion of difference in level **23** which is located substantially in front of the center console portion **2,** the display indication portion **5** substantially pointing to the driver's seat side in the plan view. Thereby, an inner space and an upper space of the instrument panel, particularly, the central portion of the instrument panel can be ensured properly, without improperly limiting spaces for the driver's seat and the passenger's seat. Thus, various onboard devices can be disposed by effectively using the inner space of the instrument panel, and the display indication portion **5** and the like can be disposed at a proper position by effectively using the upper space of the instrument panel while maintaining proper visibility thereof.

Further, the air-conditioning unit **49** is or may be stored right below the display indication portion **5,** and the onboard device, such as the navigation device **17,** is or may be disposed right behind the air-conditioning unit **39** at a position which at least partly overlaps with the air-conditioning unit **39** in the elevation view. Thereby, the air-conditioning unit **49** and another onboard device such as the navigation device **17** can be disposed efficiently, by using the relatively large volume of the inner space formed below the instrument panel.

Further, the portion of difference in level **23** of the instrument-panel recess portion **25** and the center console portion **2** preferably form the designed or shaped face, which is of the substantially reverse-J shape, which extends substantially continuously from the driver's-seat-side portion to the center console portion **2** beyond the central portion of the instrument-panel recess portion **23** in such a manner that the portion of difference in level **23** of the instrument-panel recess portion **23** projects forward in the plan view. Thereby, the driver who drives the vehicle looking at the front **X** can see the information indicated at the display indication portion **5** and the display information of the navigation device **17** provided at the upper portion **15** of the center console portion **2** and the like continuously and properly by moving the driver's eyes from the side portion to the lower portion (see the arrow **Y)** as shown in FIG. **11****,** so that the driver can properly operate the operational portion of the onboard device, i.e., various operational switches of the navigation device 17 and the operational portion **18** of the air-conditioning unit **39.**

### EMBODIMENT 2

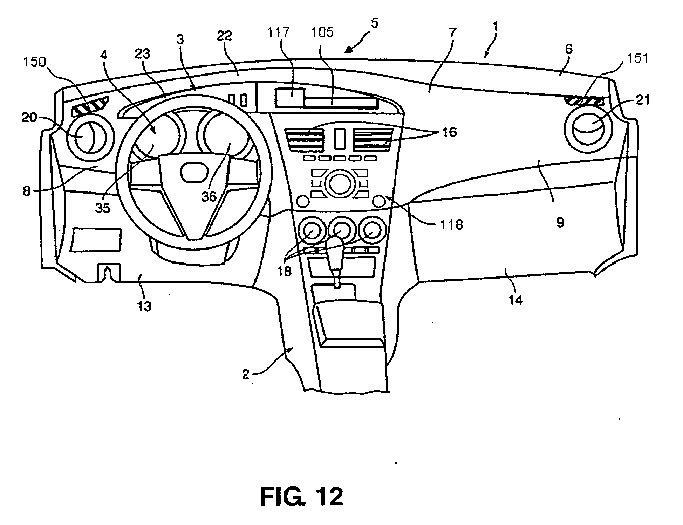

An instrument panel device according to a second embodiment of the present invention will be described referring to FIGS. **12** through **19****.** Herein, the same component elements as the first embodiment are denoted by the same reference characters, descriptions of which are omitted.

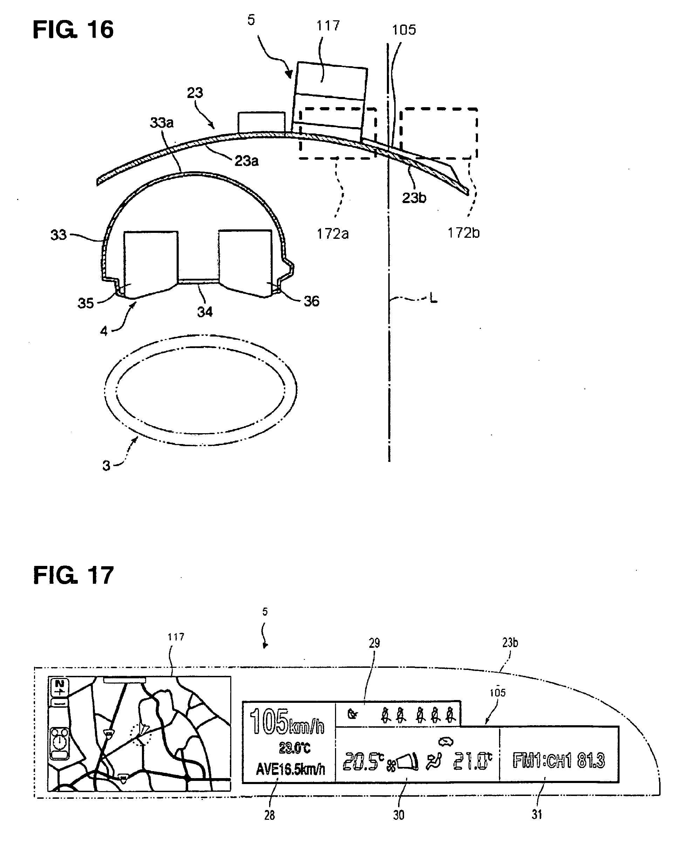

In the second embodiment, as shown in FIGS. **12** and **17****,** a navigation device **117** is provided at the display indication portion **5** in addition to a (particularly liquid-crystal, OLED or the like) indication portion **105** to indicate or display information relating to the onboard devices such as the air-conditioning unit **39** and/or the audio device. The navigation device **117** with a relatively large volume is to be disposed at a driver's-seat-side portion of the right-side half portion **23b** of the portion of difference in level **23.** The (liquid-crystal) indication portion **105** with a relatively small volume is disposed at a passenger's-seat-side portion of the right-side half portion **23b** of the portion of difference in level **23.** An operational portion **118** which comprises operational switches of the air-conditioning unit **39** and/or the audio device and so on is to be provided at the center condole portion **2** at a portion right below or adjacent to the vent grill **16.**

Further, one or more, preferably a pair of vents for demister **150, 151** which restrains the side glass from becoming clouded up to improve the visibility is provided at the instrument panel body **1** in addition to the vent for defroster **19.** The pair of vents for demister **150, 151** is disposed at portions of the rearward-slant-face portions **8, 9** which are above or adjacent to the vents **20, 21,** respectively, and they supply the conditioning air to side portions in the vehicle compartment preferably oriented in a direction of the side windows.

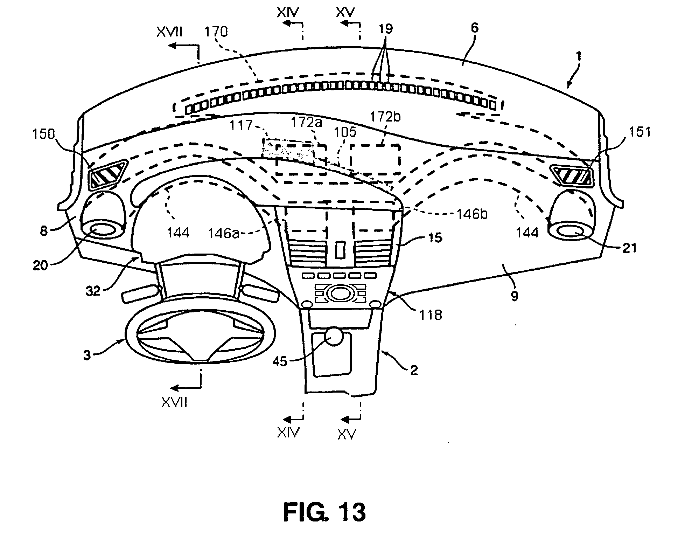

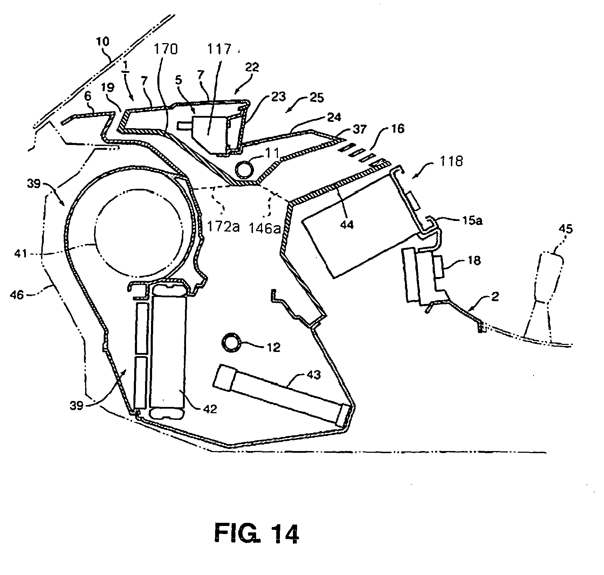

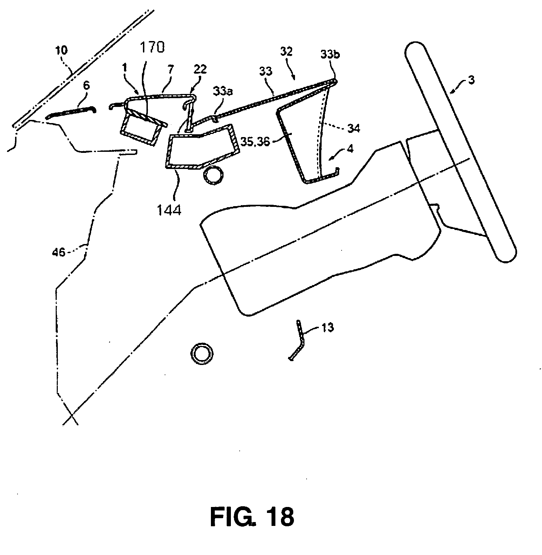

A defroster duct **170** to supply the conditioning air to the vent for defroster **19** and/or the vents for demister **150, 151** is to be provided at a portion of the instrument panel body **1** which is located in front of the ventilation duct **44,** as shown in FIG. **13****.** The defroster duct **170** substantially extends in the vehicle width direction at a front portion of the instrument panel body **1** as shown in FIG. **13****.** The defroster duct **170** extends substantially below the instrument-panel protrusion portion **22** so as to have a large volume, as shown in FIGS. **14** and **18****.**

A pair of defroster openings **172a, 172b** is formed at a bottom portion of the defroster duct **170** so as to penetrate substantially vertically at the central portion in the vehicle width direction. The air-conditioning unit **39** is disposed below the defroster duct **170.** The conditioning air from the air-conditioning unit **39** is or can be supplied into the defroster duct **170** from the defroster openings **172a**, **172b,** and then supplied into the vent for defroster **19** and the vents for demister **150, 151.**

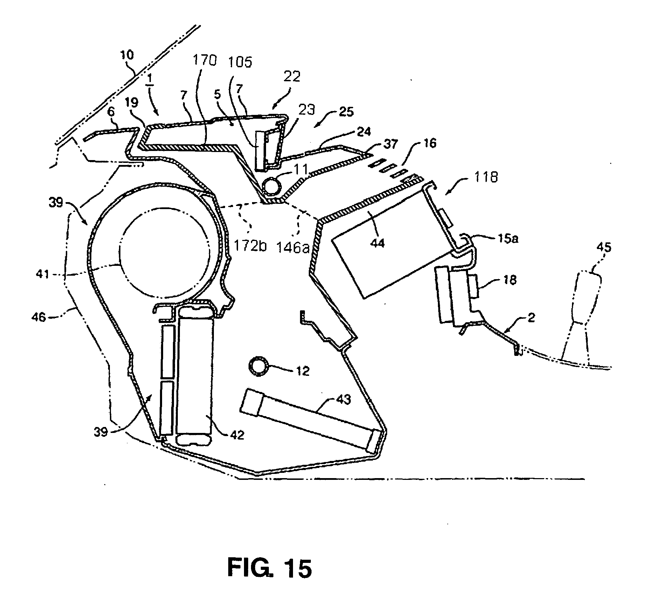

The defroster openings **172a, 172b** are formed in front of the center console portion **2** below the right-side half portion **23b** of the portion of difference in level **23.** Specifically, as shown in FIG. **16****,** the driver's-seat-side defroster opening **172a** is provided below the navigation device **117** which is provided at the driver's-seat-side portion of the right-side half portion **23b** of the portion of difference in level **23.** Meanwhile, the passenger's-seat-side defroster opening **172b** is provided below the liquid-crystal indication portion **105** which is provided at the passenger's-seat-side portion of the right-side half portion **23b** of the portion of difference in level **23.** Herein, the thickness or longitudinal thickness of the liquid-crystal indication portion **105** is thin. A front end of the passenger's-seat-side defroster opening **172b** is located in front of a front end of the liquid-crystal indication portion **105.** A part of the passenger's-seat-side defroster opening **172b** preferably does not overlap with the liquid-crystal display indication portion **105** in the plan view. Thereby, the height of the defroster duct **170** can be made great (high) at its non-overlapping portion. Thus, since the height of the defroster duct **170** is ensured at the non-overlapping portion as shown in FIG. **15****,** the flowing resistance of the conditioning air at the defroster opening **172b** can be reduced.

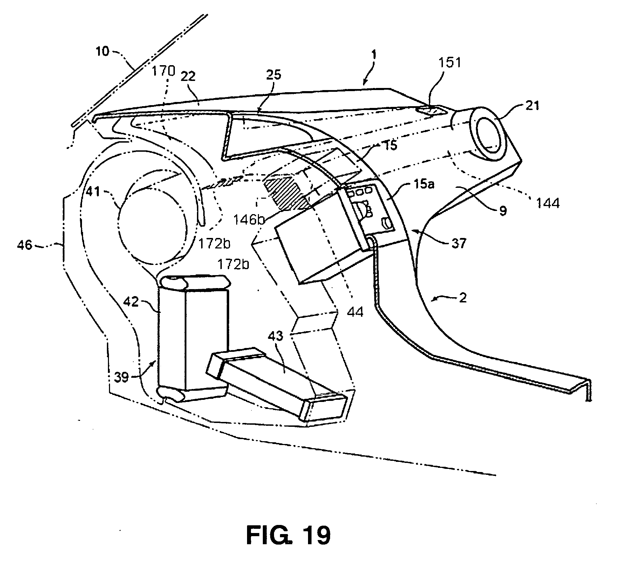

One or more ventilation ducts for vent **144** are provided at the instrument panel body **1** so as to connect to the above-described ventilation duct **44** which interconnects the air-conditioning unit **39** and the vent grill **16** and to supply the conditioning air to the side vent **20, 21** as shown in FIGS. **13** and **19****.**

One or more, preferably a pair of vent openings **146a, 146b** is formed at the bottom portion of the ventilation duct **44** so as to penetrate a specified portion vertically which is located in back of the defroster openings **172a, 172b** and below the center console portion **2.** The conditioning air from the air-conditioning unit **39** is or can be supplied to the ventilation duct **44** via the ventilation openings **146a, 146b** and then supplied to the vent grill **16.** The conditioning air is also supplied to the side vents **20, 21** from the ventilation duct **44** via the ventilation ducts for vent **144.**

The ventilation ducts for vent **144** substantially extend laterally from specified portions of the ventilation duct **44** near the defroster openings **172a, 172b.** The ventilation ducts for vent **144** on the driver's seat side extends forward from the specified portion near the defroster opening **172a,** below the portion of difference in level **23** provided at the front portion of the meter cluster portion **4,** and then to the side vent **20,** having a curve shape along the curve portion **33a** of the meter hood portion **33.** Herein, the instrument-panel protrusion portion **22** protruding upward is formed in front of or at or adjacent to the portion of difference in level **23,** so that a properly large space is or can be formed below the instrument-panel protrusion portion **22** and the portion of difference in level **23.** The navigation device **117** and the (liquid-crystal) indication portion **105** are to be disposed in front of the portion of difference in level **23.** Thus, the ventilation ducts for vent **144** are or can be disposed below the portion of difference in level **23,** as shown in FIG. **18****,** so that they can have a sufficient volume without interfering with the navigation device **177** and the (liquid-crystal) indication portion **105.** Further, the ventilation ducts for vent **144** are or can be disposed so as not to interfere with the meter cluster portion **4** in front of the meter cluster portion **4.**

According to the present embodiment, the vent for defroster **19** is provided at the front portion of the upper face portion **7** of the instrument panel body **1,** the air-conditioning unit **39** is stored right below the display indication portion **5,** and the defroster openings **172a**, **172b** which supply the conditioning air from the air-conditioning unit **39** to the vent for defroster **19** are formed at the instrument panel body **1** preferably in such a manner that at least a part of the defroster opening **172b** on the passenger's seat side does not overlap with the display indication portion **5** in the plan view. Thereby, the flow of conditioning air can be made smooth, preventing the conditioning air passing through the vent for defroster **172b** from interfering with the display indication portion **5.**

That is, the defroster opening **172b** is formed below the liquid-crystal indication portion **105** with the longitudinally thin thickness so that the defroster opening **172b** does not overlap with the display indication portion **5** in the plan view. Thereby, the sufficient height of a specified (predetermined or predeterminable) portion of the defroster duct **170** to supply the conditioning air from the air-conditioning unit **39** to the vent for defroster **19** which is located near the defroster opening **172b** can be ensured. Accordingly, the flowing resistance of the conditioning air at the defroster opening **172b** can be restrained.

Further, the side vent **20** which supplies the conditioning air to the side portion of the vehicle compartment is formed at the side portion of the instrument panel body **1,** and the ventilation duct for vent **144** which supplies the conditioning air from the air-conditioning unit **39** to the side vent **20** is provided so as to substantially extend in the vehicle width direction in front of the meter cluster portion **4** and below the portion of difference in level **23.** Thereby, the volume of the ventilation duct for vent **144** can be ensured properly, avoiding the interference of the meter cluster portion **4** and the display indication portion **5.**

Herein, the disposition of the defroster openings **172a**, **172b** is not limited to the above-described structure. For example, the defroster opening **172a** on the driver's seat side may be disposed so as not to overlap with the display indication portion **5** in the plan view, in addition to the defroster opening **172b** on the passenger's seat side. Further, the number of defroster openings should not be limited to the above-described structure, but only one defroster opening may be provided in such a manner that a part of it does not overlap with the display indication portion **5.**

Also, the specific structure of the display indication portion **5** is not limited to the above-described one. For example, the navigation device **117** may be disposed on the side of the passenger's seat, and the liquid-crystal indication portion **105** may be disposed on the side of the driver's seat. In case the navigation device **117** is disposed on the side of the passenger's seat, however, the driver can see the navigation device **117** properly without moving the driver's eyes greatly. Further, the body of the navigation device may be provided at the center console portion **2,** while the simplified navigation device may be provided at the display indication portion 5.

The present invention should not be limited to the above-described embodiments, and any other modifications and improvements may be applied in the scope of a sprit of the present invention.

## Claims

1. An instrument panel device, comprising:
an instrument panel body **(1)** to be provided at a front portion of a vehicle compartment so as to project rearward and extend in a vehicle width direction;
a meter cluster portion **(4)** to be provided in front of a steering wheel **(3);**
a display indication portion **(5)** to indicate information relating to at least one onboard device;
an instrument-panel recess portion **(25)** provided at an upper face portion **(7)** of the instrument panel body **(1),** the instrument-panel recess portion **(25)** comprising a bottom face portion **(24)** which substantially extends from a central portion of the instrument-panel recess portion **(25)** to a driver's-seat-side end portion of the instrument-panel recess portion **(25)** and a portion of difference in level **(23)** which rises upward from a front end portion of the bottom face portion **(24);**
a projection portion **(32)** to be provided in front of the steering wheel **(3),** the projection portion **(32)** being formed in such a manner that a specified portion of the bottom face portion **(24)** of the instrument-panel recess portion **(25)** which is located in front of the steering wheel **(3)** projects substantially upward,
wherein a meter-panel face portion **(34)** of said meter cluster portion **(4)** is provided at said projection portion **(32),** and said display indication portion **(5)** is provided at a central portion of said portion of difference in level **(23)** in the vehicle width direction.

2. The instrument panel device of claim 1, further comprising an instrument-panel protrusion portion **(22)** provided at or near the upper face portion **(7)** of the instrument panel body **(1),** the instrument-panel protrusion portion **(22)** forming an upper face of said instrument-panel recess portion **(25).**

3. The instrument panel device of claim 2, wherein said instrument-panel protrusion portion **(22)** has a peak point which is the highest of the upper face portion **(7)** of the instrument panel body **(1),** and said display indication portion **(5)** is located substantially on a center side of the vehicle compartment from the peak point of the instrument-panel protrusion portion **(22).**

4. The instrument panel device of any one of the preceding claims, further comprising an instrument-panel rearward-slant-face portion **(8, 9)** provided at the upper face portion **(7)** of the instrument panel body (**1**), the instrument-panel rearward-slant-face portion **(8, 9)** being formed so as to gently slant rearward over a substantially whole area of the upper face portion **(7)** of the instrument panel body **(1)** in the vehicle width direction in such a manner a central portion thereof extends rearward the most, wherein the central portion of the instrument-panel rearward-slant-face portion **(8, 9)** is connected to a center console portion **(2)** which comprises at least one operational portion **(18)** of an onboard device **(39),** and said display indication portion **(5)** is provided at a specified portion of said portion of difference in level **(23)** which is located substantially in front of the center console portion **(2),** the display indication portion **(5)** pointing to a driver's seat side in a plan view.

5. The instrument panel device of any one of the preceding claims, wherein said portion of difference in level **(23)** of the instrument-panel recess portion **(25)** and said center console portion **(2)** form a designed face, which is of a substantially reverse-J shape, which extends continuously from a driver's-seat-side portion to the center console portion **(2)** beyond the central portion of the instrument-panel recess portion **(25)** in such a manner that the portion of difference in level **(23)** of the instrument-panel recess portion **(25)** projects substantially forward in a plan view.

6. The instrument panel device of any one of the preceding claims, wherein said center console portion **(2)** is provided so as to project upward in a mountain shape in a side view in such a manner that a front-upper end portion thereof connects to a rear end of said instrument-panel recess portion **(25)** and an onboard device **(17)** is stored therein.

7. The instrument panel device of any one of the preceding claims, wherein said center console portion **(2)** has a rear wall face **(15a)** which extends obliquely rearward and downward, an onboard device **(17)** which is of a substantially rectangular parallelepiped shape is disposed in the central console portion **(2)** along the rear wall face, and another onboard device **(40)** is disposed in the central console portion (2) before the onboard device **(17)** which is of the substantially rectangular parallelepiped shape.

8. The instrument panel device of claim 7, wherein a speaker **(40)** of an audio device is disposed at a front portion in the center console portion **(2),** a ventilation duct **(44)** of an air-conditioning unit **(39)** is disposed in the center console portion **(2)** behind the speaker **(40),** and said onboard device **(17)** which is of the substantially rectangular parallelepiped shape is disposed below the ventilation duct **(44).**

9. The instrument panel device of any one of the preceding claims, wherein an onboard functional portion **(26, 27)** is provided at a specified portion of said portion of difference in level **(23)** of the instrument-panel recess portion **(25)** which is located at a position which overlaps with said meter cluster portion **(4)** in an elevation view.

10. The instrument panel device of any one of the preceding claims, wherein said portion of difference in level **(23)** of the instrument-panel recess portion **(25)** has a different design from a surrounding part of the upper face portion **(7)** of the instrument panel body **(1).**

11. The instrument panel device of any one of the preceding claims, wherein an air-conditioning unit **(39)** is stored right below said display indication portion **(5),** and an onboard device **(17)** is disposed right behind the air-conditioning unit **(39)** at a position which overlaps with the air-conditioning unit **(39)** in an elevation view.

12. The instrument panel device of any one of the preceding claims, wherein a vent for defroster **(19)** is provided at a front portion of the upper face portion **(7)** of said instrument panel body **(1),** an air-conditioning unit **(39)** is stored right below said display indication portion **(5),** and a defroster opening **(172b)** for supplying conditioning air from the air-conditioning unit **(39)** to the vent for defroster **(19)** is formed at the instrument panel body **(1)** in such a manner that at least a part of the defroster opening **(172b)** does not overlap with the display indication portion **(5)** in a plan view, wherein a part of the defroster opening vent for defroster **(172b)** which is located further from a driver's seat in the vehicle width direction preferably does not overlap with the display indication portion **(5)** in the plan view.

13. The instrument panel device of any one of the preceding claims, wherein a navigation device **(17)** is provided at a part of the display indication portion **(5)** which is located closer to the driver's seat.

14. The instrument panel device of any one of the preceding claims, wherein at least one vent **(20)** to supply conditioning air to a side portion of the vehicle compartment is formed at a side portion of said instrument panel body **(1),** and a ventilation duct **(144)** to supply the conditioning air from an air-conditioning unit **(39),** which is stored right below said display indication portion **(5),** to the vent **(20)** is provided so as to extend in the vehicle width direction in front of said meter cluster portion **(4)** and below said portion of difference in level **(23).**

15. A method of configuring a instrument panel device, comprising the following steps:
providing an instrument panel body **(1)** at a front portion of a vehicle compartment so as to project rearward and extend in a vehicle width direction;
providing a meter cluster portion **(4)** substantially in front of a steering wheel **(3);**
providing an instrument-panel recess portion **(25)** at an upper face portion **(7)** of the instrument panel body **(1),** the instrument-panel recess portion **(25)** comprising a bottom face portion **(24)** which substantially extends from a central portion of the instrument-panel recess portion **(25)** to a driver's-seat-side end portion of the instrument-panel recess portion **(25)** and a portion of difference in level **(23)** which rises upward from a front end portion of the bottom face portion **(24);** and
providing a projection portion **(32)** in front of the steering wheel **(3),** the projection portion **(32)** being formed in such a manner that a specified portion of the bottom face portion **(24)** of the instrument-panel recess portion **(25)** which is located in front of the steering wheel **(3)** projects substantially upward,
wherein a meter-panel face portion **(34)** of said meter cluster portion **(4)** is provided at said projection portion **(32),** and a display indication portion **(5)** a display to indicate information relating to at least one onboard device is provided at a central portion of said portion of difference in level **(23)** in the vehicle width direction.
